# EUROPÄISCHE PATENTSCHRIFT

(11) **EP 3 362 703 B1**
(45) Veröffentlichungstag und Bekanntmachung des Hinweises auf die Patenterteilung: **01.04.2020**
(21) Anmeldenummer: 16797726.3
(22) Anmeldetag: 07.10.2016
(51) Int. Cl.: F16F 15/131, F16F 15/139

(54) **DREHSCHWINGUNGSDÄMPFER**
TORSIONAL VIBRATION DAMPER
AMORTISSEUR DE VIBRATION DE TORSION

(30) Priorität: 12.10.2015 DE 102015219740; 17.12.2015 DE 102015225631
(43) Veröffentlichungstag der Anmeldung: 22.08.2018
(73) Patentinhaber: Schaeffler Technologies AG & Co. KG, 91074 Herzogenaurach (DE)
(72) Erfinder: ACHMETSCHIN, Ildar, 76532 Baden-Baden (DE); STIELER, Johannes, 77815 Bühl (DE)
(86) Internationale Anmeldenummer: PCT/DE2016/200465
(87) Internationale Veröffentlichungsnummer: WO 2017/063648

(56) Entgegenhaltungen:
- EP-A1- 2 672 141
- US-A1- 2002 039 925

## Beschreibung

Die Erfindung betrifft einen Drehschwingungsdämpfer, insbesondere Zweimassenschwungrad, mit dessen Hilfe Drehschwingungen einer Antriebswelle eines Kraftfahrzeugmotors gedämpft werden können.

Aus DE 10 2012 220 519 A1 ist ein Zweimassenschwungrad mit einer Primärmasse und einer über eine Bogenfeder mit der Primärmasse begrenzt verdrehbar gekoppelte Sekundärmasse bekannt, bei der die Sekundärmasse mit Hilfe von Reibeinrichtungen bewusst einer Reibung ausgesetzt sein kann, um Resonanzeffekte zu dämpfen.

Die EP 2 672 141 A1 offenbart alle Merkmale des Oberbegriffs des Anspruchs 1.

Es besteht ein ständiges Bedürfnis das Dämpfungsverhalten von Drehschwingungsdämpfern zu verbessern.

Es ist die Aufgabe der Erfindung Maßnahmen aufzuzeigen, die einen Drehschwingungsdämpfer mit einem guten Dämpfungsverhalten ermöglichen.

Die Lösung der Aufgabe erfolgt erfindungsgemäß durch einen Drehschwingungsdämpfer mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können. Erfindungsgemäß ist ein Drehschwingungsdämpfer, insbesondere Zweimassenschwungrad, zur Drehschwingungsdämpfung zwischen einer Antriebswelle eines Kraftfahrzeugmotors und einer Getriebeeingangswelle eines Kraftfahrzeuggetriebes, vorgesehen mit einer Primärmasse zum im Zugbetrieb Einleiten eines von dem Kraftfahrzeugmotor erzeugbaren Drehmoments, einer relativ zur Primärmasse begrenzt verdrehbaren Sekundärmasse zum Ausleiten des Drehmoments und einem an der Primärmasse und an der Sekundärmasse angreifbaren, insbesondere als Bogenfeder ausgestalteten, Energiespeicherelement zur Übertragung des Drehmoments zwischen der Primärmasse und der Sekundärmasse, wobei bei einer Relativbewegung zumindest eines Teils des komprimierenden Energiespeicherelements relativ zu der Primärmasse aus einer Neutralstellung heraus in einer der Drehrichtung des Drehschwingungsdämpfer im Zugbetrieb entsprechenden Zugrichtung eine höhere Reibungskraft an dem Energiespeicherelement angreifbar ist als bei einer Relativbewegung zumindest eines Teils des komprimierenden Energiespeicherelements relativ zu der Primärmasse aus einer Neutralstellung heraus in einer der Drehrichtung des Drehschwingungsdämpfer im Zugbetrieb entgegen gerichteten Schubrichtung, wobei das Energiespeicherelement radial außen an einer Gleitschale relativ bewegbar reibungsbehaftet geführt ist, wobei die Gleitschale zur Bereitstellung unterschiedlicher an dem Energiespeicherelement angreifender Reibungskräfte in Umfangsrichtung unterschiedliche Oberflächenbeschaffenheiten aufweist.

In einem Antriebsstrang eines Kraftfahrzeugs erfolgt eine Drehmomentübertragung in der Regel in Zugrichtung, das heißt vom Kraftfahrzeugmotor zu den Antriebsrädern. Hierbei wird die Erkenntnis ausgenutzt, dass eine Drehmomentübertragung in dem Drehschwingungsdämpfer zu einem überwiegenden Zeitraum bei einem Halten der aktuellen Geschwindigkeit oder bei einem Beschleunigen erfolgt. Bei einem Beschleunigen kann die Antriebswelle zusammen mit der Primärmasse die Sekundärmasse überholen, so dass bezogen auf eine Neutralstellung das Energiespeicherelement in Drehrichtung der Antriebswelle auf die Sekundärmasse zu bewegt und dabei komprimiert wird. Für einen mit der Primärmasse mitbewegten Beobachter bedeutet dies, dass das von der Primärmasse weg weisende und in Drehrichtung der Primärmasse zur Sekundärmasse weisende Ende des Energiespeicherelements beim Komprimieren eine Relativbewegung zur Primärmasse entgegen der Drehrichtung der Antriebswelle, also entlang der Schubrichtung, ausführt. Ein von der Primärmasse zur Sekundärmasse entgegen der Drehrichtung der Primärmasse weisendes Ende des Energiespeicherelements wird nicht weiter aktiv komprimiert, sondern kann in seiner aktuellen Stellung von einem Anschlag der Sekundärmasse abheben, wobei dessen Relativbewegung hierbei nicht betrachtet wird.

Wenn der Fahrer lediglich das Gaspedal nicht mehr betätigt, wird in der Regel auf einen gewünschten Segelbetrieb erkannt, in dem das Kraftfahrzeug kraftstoffsparend von seinem eigenen Massenträgheitsmoment fortbewegt werden soll. In diesem Fall würde der Kraftfahrzeugmotor von dem Antriebsstrang abgekoppelt, so dass das Schleppmoment des Kraftfahrzeugmotors nicht den kraftstoffsparenden Segelbetrieb beeinträchtigt. Ein Drehmomentfluss in Schubrichtung, das heißt von den Antriebsrädern zu dem Kraftfahrzeugmotor, wird dadurch bewusst verhindert. Dadurch wird auch die Situation verhindert, dass die Sekundärmasse die Primärmasse überholt und das Energiespeicherelement von der Sekundärmasse auf die Primärmasse zu komprimiert wird. In diesem Fall würde dies für einen mit der Primärmasse mitbewegten Beobachter bedeuten, dass das von der Primärmasse weg wesende und entgegen der Drehrichtung der Primärmasse zur Sekundärmasse weisende Ende des Energiespeicherelements bezogen auf eine Neutralstellung eine Relativbewegung zur Primärmasse mit der Drehrichtung der Antriebswelle, also entlang der Zugrichtung, ausführt. Ein von der Primärmasse zur Sekundärmasse mit der Drehrichtung der Primärmasse weisendes Ende des Energiespeicherelements wird nicht weiter aktiv komprimiert, sondern kann in seiner aktuellen Stellung von einem Anschlag der Sekundärmasse abheben, wobei dessen Relativbewegung hierbei nicht betrachtet wird. Wenn der Fahrer das Kraftfahrzeug durch Betätigen der Bremse abbremsen will, kann es insbesondere bei einem sehr starken Bremsen sinnvoll sein den Kraftfahrzeugmotor wieder an den Antriebsstrang anzukoppeln und das Schleppmoment des Kraftfahrzeugmotors als sogenannte Motorbremse zu nutzen. Diese Zeitspanne ist jedoch in der Regel sehr kurz.

Dies bedeutet, dass eine aktive Relativbewegung des komprimierenden Teils des Energiespeicherelements in Zugrichtung zu einem sehr überwiegenden Teil nur bei einem Auftreten von Drehschwingungen erfolgt. Insbesondere während einer Beschleunigungsphase des Kraftfahrzeugs müsste die Amplitude der Drehschwingung aber schon besonders groß sein, damit ein Teil des bereits komprimierten Energiespeicherelements aus der in Schubrichtung relativ zur Primärmasse verlagerten Grundlage über die nominale Neutralstellung hinaus in Zugrichtung bewegt werden kann. Derartig große Amplituden treten jedoch in der Regel nur in der Nähe einer Resonanzdrehzahl auf, bei der sich die Amplituden der Drehzahlschwingen selbst verstärken können. Bei den im Resonanzbereich auftretenden großen Drehschwingungen wird also auch der in Zugrichtung komprimierbare Teil des Energiespeicherelements aktiv komprimiert, so dass die an diesem Teil des Energiespeicherelements angreifende höhere Reibungskraft wirksam wird. Dies führt zu einer zusätzliche Dämpfung für das aus der Primärmasse, dem Energiespeicherelement und der Sekundärmasse zusammengesetzte schwingungsfähige Feder-Masse-System, das resonanzbedingte Drehschwingungseffekte als reibungsbehaftetes Dämpfungselement dämpfen kann. Eine Drehschwingungsdämpfung bei einer Relativbewegung des in Schubrichtung aktiv komprimierenden Teils des Energiespeicherelements wird durch die geringe wirksame Reibungskraft nicht beeinträchtigt, so dass insbesondere bei einem Beschleunigen des Kraftfahrzeugs, eine Drehschwingungsdämpfung durch eine entsprechende Schwingungsisolation nicht oder nur gering beeinträchtigt ist. Dies ermöglicht einerseits eine gute Schwingungsdämpfung und andererseits eine Dämpfung von Resonanzeffekten.

Zudem kann die auf den in Schubrichtung aktiv komprimierenden Teil des Energiespeicherelements wirkende geringe Reibungskraft fühlbare Schläge des Drehschwingungsdämpfers bei einem Übergang der Reibung an dem Energiespeicherelement von Haftreibung auf Gleitreibung und wieder auf Haftreibung vermeiden oder zumindest reduzieren, die beispielsweise zu hörbaren Brumm-Geräusche ("Schubbrummen") führen können. Wenn bei einem Lastwechsel ein Axialende des Energiespeicherelements aufgrund des Spiels in Umfangsrichtung nicht an einem Anschlag der Sekundärmasse anschlägt, kann durch den Bereich der erhöhten Reibungskraft eine Verschiebung des gesamten Energiespeicherelements relativ zur Primärmasse verhindert werden, wenn im Rahmen eines sogenannten Zugaussetzer-Doppelschlags in schneller Folge ein Schlag in die gleiche Umfangsrichtung auf das Energiespeicherelement ausgeübt wird. Ebenfalls kann eine Verschiebung des gesamten Energiespeicherelements bei plötzlichen hohen Drehmomentstößen ("Impacts") vermieden oder zumindest reduziert werden. Zudem wird dadurch die Vorkonditionierung des Energiespeicherelements für einen Gangwechsel in einem angekoppelten Kraftfahrzeuggetriebe gefördert. Bei einem in Schubrichtung eingeleiteten plötzlichen Drehmomentschlag infolge eines Gangwechsels, kann ein kurzzeitiger Schubbetrieb stattfinden, bei dem die erhöhte Reibung an dem aktiv in Zugrichtung komprimierbaren Teil des Energiespeicherelements ein Verschieben des gesamten Energiespeicherelements relativ zur Primärmasse verhindern kann. Durch die geringere Reibung an den in Schubrichtung aktiv komprimierenden Teil des Energiespeicherelements kann die Haftreibung besonders schnell und bereits bei geringen angreifenden Drehmomenten überwunden werden, so dass der Wechsel zwischen Haftreibung und Gleitreibung von einem Fahrer kaum wahrgenommen werden kann. Sofern überhaupt der aktiv komprimierende Teil des Energiespeicherelements im regulären Betrieb über die Neutralstellung hinaus in Zugrichtung bewegt wird, wirkt sich die in diesem Schwingwinkelbereich wirkende erhöhte Reibung bei geringen Amplituden der Drehschwingung kaum aus, da die erforderliche Dämpfungswirkung bei der Relativbewegung des aktiv komprimierenden Teils des Energiespeicherelement in Schubrichtung erreicht werden kann.

Hierbei wird zudem die Erkenntnis ausgenutzt, dass bei dem Energiespeicherelement jeweils unterschiedliche Bereiche komprimiert werden, wenn einerseits die Primärmasse die Sekundärmasse überholt oder andererseits die Sekundärmasse die Primärmasse überholt. Dies ermöglicht es für die unterschiedlichen Bereiche unterschiedliche relevante Reibungskräfte vorzusehen, indem insbesondere für die in diesen Bereichen vorliegenden Reibpartner unterschiedliche Reibungskoeffizienten vorgesehen werden. Durch die an dem in Zugrichtung aktiv komprimierende Teil des Energiespeicherelement angreifenden hohe Reibung können Resonanzeffekte gedämpft werden, während eine reguläre Schwingungsdämpfung durch die geringe Reibung an dem in Schubrichtung aktiv komprimierende Teil des Energiespeicherelement sichergestellt werden kann, so dass ein Drehschwingungsdämpfer mit einem guten Dämpfungsverhalten ermöglicht ist.

Das Energiespeicherelement ist insbesondere als bogenförmige Schraubenfeder ausgestaltet, die mit ihren Windungen reibungsbehaftet an der Primärmasse abgleiten kann. Hierbei kann das als Bogenfeder ausgestaltete Energiespeicherelement mit dem einen axialen Ende in Zugrichtung komprimiert und mit dem anderen axialen Ende in Schubrichtung komprimiert werden. Das in Schubrichtung komprimierbare Ende des Energiespeicherelements kann von einem Mittelpunkt des Energiespeicherelements in Drehrichtung der Primärmasse im Zugbetrieb des Antriebstrangs, also in Zugrichtung, abstehen, während das in Zugrichtung komprimierbare Ende des Energiespeicherelements von dem Mittelpunkt des Energiespeicherelements entgegen der Drehrichtung der Primärmasse im Zugbetrieb des Antriebstrangs, also in Schubrichtung, abstehen kann. Unter der Neutralstellung des Energiespeicherelements wird ein Zustand des Energiespeicherelements zur Primärmasse verstanden, des das Energiespeicherelement automatisch einnimmt, wenn im Stillstand des Drehschwingungsdämpfers keine Kräfte von der Primärmasse oder der Sekundärmasse in das Energiespeicherelement eingeleitet werden. Die Relativlage des Energiespeicherelements in der Neutralstellung relativ zur Primärmasse kann innerhalb eines Spiels in Umfangsrichtung zwischen der Länge des Energiespeicherelements und einem Abstand zwischen Anschlägen der Sekundärmasse, an denen das Energiespeicherelement an ihren jeweiligen Axialenden anschlagen kann, unterschiedlich sein. Das Energiespeicherelement wird seine Neutralstellung einnehmen, wenn bei einer konstanten Nenndrehzahl ohne Drehschwingungen weder die Primärmasse die Sekundärmasse noch die Sekundärmasse die Primärmasse überholt. Bei einer konstanten Nenndrehzahl kann das jeweilige axiale Ende des Energiespeicherelements bei auftretenden Drehschwingungen in Umfangsrichtung um seine Position in der Neutralstellung in Zugrichtung und Schubrichtung oszillieren. Insbesondere kann das Energiespeicherelement als zwei voneinander getrennte Bogenfedern zusammengesetzt sein. Dadurch ist es leicht möglich die Primärmasse zwischen den beiden Bogenfedern mit einen beispielsweise durch Prägen ausgebildeten Ansatz eingreifen und in tangentialer Richtung angreifen zu lassen. Vorzugsweise bildet die Primärmasse einen Aufnahmeraum aus, in dem das Energiespeicherelement eingesetzt ist. Die Sekundärmasse kann mit einem radial abstehenden Flanschansatz in den Aufnahmeraum hineinragen, um an dem Energiespeicherelement tangential angreifen zu können. Vorzugsweise sind zwei oder mehr Energiespeicherelemente vorgesehen, so dass der Flanschansatz der Sekundärmasse in beiden Tangentialrichtungen an jeweils einem Energiespeicherelement angreifen kann. Bei dem Vergleich der Reibungskräfte, die bei einer das Energiespeicherelement komprimierenden Relativbewegung zur Primärmasse in Zugrichtung beziehungsweise in Schubrichtung auftreten, wird jeweils die Haftreibung bei der einen Relativbewegung mit der Haftreibung bei der anderen Relativbewegung sowie die Gleitreibung bei der einen Relativbewegung mit der Gleitreibung bei der anderen Relativbewegung verglichen. Ein Vergleich einer Haftreibung mit einer Gleitreibung wird nicht betrachtet.

Insbesondere weist das Energiespeicherelement einen in Schubrichtung an der Sekundärmasse anschlagbaren Schubendbereich und einen in Zugrichtung an der Sekundärmasse anschlagbaren Zugendbereich auf, wobei auf dem Schubendbereich eine höhere Reibungskraft als an dem Zugendbereich angreift. Der Schubendbereich und der Zugendbereich können insbesondere durch die von einem Krafteinleitungspunkt, an dem die Primärmasse an dem Energiespeicherelement angreift, abstehenden axialen Enden des insbesondere als Bogenfeder ausgestalteten Energiespeicherelements gebildet werden. Der Schubendbereich und der Zugendbereich können durch die Windungen der Bogenfeder ausgestaltet sein. Bei geringen angreifenden Drehmomenten können bei einer Komprimierung der Bogenfeder nur wenige Windungen die Haftreibung überwinden und mit Gleitreibung verlagert werden, so dass der Schubendbereich beziehungsweise der Zugendbereich eine geringere Erstreckung in Umfangsrichtung aufweist, die im Wesentlichen der Erstreckung der gleitreibend bewegten Windungen entspricht. Bei hohen angreifenden Drehmomenten können entsprechend mehr Windungen der komprimierenden Bogenfeder die Haftreibung überwinden, so dass der Schubendbereich beziehungsweise der Zugendbereich entsprechend größer ist. Aufgrund der höheren Reibungskraft im Schubendbereich ist der Schubendbereich in den allermeisten Betriebssituationen kleiner als der Zugendbereich. Durch die unterschiedliche Anpassung der angreifbaren Reibungskraft, insbesondere Haftreibung und Gleitreibung, in dem Schubendbereich einerseits und dem Zugendbereich andererseits, kann die unterschiedliche Reibungsdämpfung in unterschiedlichen Kompressionsrichtungen des Energiespeicherelements leicht erreicht werden.

Vorzugsweise ist für das Energiespeicherelement in einem in Zugrichtung relativ zu der Primärmasse verlagerbaren Bereich des komprimierenden Energiespeicherelements ein höherer Reibungskoeffizient zu einem korrespondieren Reibpartner wirksam als in einem in Schubrichtung relativ zu der Primärmasse verlagerbaren Bereich des komprimierenden Energiespeicherelements. Die unterschiedlichen Reibungskräfte, insbesondere im Schubendbereich und im Zugendbereich, können allein durch unterschiedliche Reibungskoeffizienten erreicht werden, so dass es nicht erforderlich ist unterschiedlich starke Normalkräfte in den unterschiedlichen Bereichen des Energiespeicherelements wirken zu lassen. Die unterschiedlichen Reibungskoeffizienten können hierbei durch die Materialeigenschaften der wirksamen Reibpartner für das Energiespeicherelement erreicht werden, wodurch die Montage vereinfacht ist. Zusätzliche Federelemente zur Bereitstellung einer zusätzlichen Anpresskraft für eine erhöhte Reibungskraft an dem Energiespeicherelement können dadurch eingespart werden. Je nach gewünschter Reibungskraft kann das mindestens eine zusätzliche Federelement jedoch trotzdem vorgesehen sein, um eine entsprechende besonders hohe Reibungskraft bereitstellen zu können.

Besonders bevorzugt ist in einem in Zugrichtung relativ zu der Primärmasse verlagerbaren Bereich des komprimierenden Energiespeicherelements eine höhere Oberflächenrauigkeit des Energiespeicherelements und/oder eines korrespondieren Reibpartners wirksam als in einem in Schubrichtung relativ zu der Primärmasse verlagerbaren Bereich des komprimierenden Energiespeicherelements. Über die Oberflächenrauigkeit kann der Reibungskoeffizient und damit die angreifbare Reibungskraft an dem Energiespeicherelement eingestellt werden. Dadurch ist es insbesondere möglich in den bei einem Komprimieren des Energiespeicherelements in Zugrichtung und in Schubrichtung relativ zur Primärmasse verlagerten Bereich des Energiespeicherelements, insbesondere im Schubendbereich und im Zugendbereich, gleiche Materialpaarungen, insbesondere eine Stahl/Stahl-Reibpaarung, vorzusehen und die unterschiedlichen angreifbaren Reibungskräfte über die Oberflächenrauigkeiten einzustellen. Die Herstellung des Drehschwingungsdämpfers ist dadurch vereinfacht und kostengünstig.

Erfindungsgemäß ist das Energiespeicherelement radial außen an einer Gleitschale relativ bewegbar reibungsbehaftet geführt, wobei die Gleitschale zur Bereitstellung unterschiedlicher an dem Energiespeicherelement angreifender Reibungskräfte in Umfangsrichtung unterschiedliche Oberflächenbeschaffenheiten aufweist. Vorzugsweise weist ausschließlich nur die Gleitschale unterschiedliche Oberflächenbeschaffenheiten auf, während das Energiespeicherelement eine kontinuierlich gleiche Oberflächenbeschaffenheit aufweist. Die Gleitschale kann als separates Bauteil leicht mit einer in Umfangsrichtung unterschiedlichen Oberflächenbeschaffenheit hergestellt werden und in dem Drehschwingungsdämpfer montiert werden. Dadurch kann die unterschiedliche Reibungsdämpfung in unterschiedlichen Kompressionsrichtungen des Energiespeicherelements leicht erreicht werden.

Vorzugsweise weist das Energiespeicherelement mindestens einen die Gleitschale direkt kontaktierenden Gleitschuh auf. Dadurch ist es möglich einen Reibkontakt von Windungen einer Bogenfeder, die Teil des Energiespeicherelements ist, an der Gleitschale zu vermeiden. Ein Reibkontakt zwischen dem Energiespeicherelement und der Gleitschale findet insbesondere ausschließlich über die Gleitschuhe ab. Durch die Gleitschuhe können leicht unterschiedliche Abschnitte der Bogenfeder aktiviert werden. Bei geringen angreifenden Drehmomenten kann beispielsweise nur ein Gleitschuh die Haftreibung überwinden, so dass nur die Windungen zwischen dem ersten Gleitschuh und dem nächsten die Haftreibung nicht überwindenden Gleitschuh für die Schwingungsdämpfung wirksam ist. Bei größeren angreifenden Drehmomenten können entsprechend mehr Gleitschuhe die Haftreibung überwinden, so dass entsprechend mehr Windungen der Bogenfeder für die Schwingungsdämpfung wirksam sind. Insbesondere kann über die Reibpaarung zwischen dem jeweiligen Gleitschuh und der Gleitschale für jede Reibpaarung über den jeweiligen dort wirksamen Reibungskoeffizient eine unterschiedliche angreifbare Reibungskraft eingestellt werden.

Besonders bevorzugt liegt in einem in Zugrichtung relativ zu der Primärmasse verlagerbaren Bereich des komprimierenden Energiespeicherelements und/oder eines korrespondierenden Reibpartners eine reibungserhöhende spanende Oberflächenbearbeitung und in einem in Schubrichtung relativ zu der Primärmasse verlagerbaren Bereich des komprimierenden Energiespeicherelements und/oder eines korrespondierenden Reibpartners eine reibungsverringernde spanende Oberflächenbearbeitung vor. Über die spanende Bearbeitung kann leicht die Oberflächengüte, insbesondere die Oberflächenrauigkeit, vorzugsweise im Schubendbereich und im Zugendbereich, eingestellt werden. Dadurch kann die unterschiedliche Reibungsdämpfung in unterschiedlichen Kompressionsrichtungen des Energiespeicherelements leicht erreicht werden.

Insbesondere sind in einem in Zugrichtung relativ zu der Primärmasse verlagerbaren Bereich des komprimierenden Energiespeicherelements und in einem in Schubrichtung relativ zu der Primärmasse verlagerbaren Bereich des komprimierenden Energiespeicherelements unterschiedliche Oberflächenbearbeitungen durch unterschiedliche spanende Bearbeitungsrichtungen und/oder unterschiedlich große spanende Bearbeitungswerkzeuge und/oder unterschiedlich hohe Bearbeitungsdrucke beim Zerspanen und/oder unterschiedlich hohe Bearbeitungsdauern und/oder eine unterschiedliche hohe Anzahl aufgebrachter Reibungspartikel erzeugt. Dadurch kann die unterschiedliche Reibungsdämpfung in unterschiedlichen Kompressionsrichtungen des Energiespeicherelements leicht während der Fertigung der Reibpartner an dem Energiespeicherelement erreicht werden.

Vorzugsweise ändert sich die an dem Energiespeicherelement angreifbare Reibungskraft in Umfangsrichtung kontinuierlich und/oder sprungartig. Eine kontinuierliche Änderung der angreifbaren Reibungskraft in Umfangsrichtung kann ruckartige Relativbewegungen des Energiespeicherelements relativ zur Primärmasse reduzieren, so dass ein hoher Fahrkomfort erreicht ist. Eine sprungartige Änderung der angreifbaren Reibungskraft in Umfangsrichtung kann besonders kostengünstig gefertigt werden, indem in Umfangsrichtung unterschiedliche definierte Abschnitte unterschiedlich bearbeitet werden. Insbesondere werden besonders viele Abschnitte mit einer konkreten Erstreckung in Umfangsrichtung definiert, die jeweils leicht unterschiedlich bearbeitet werden, so dass sich eine quasi-kontinuierliche Änderung der angreifbaren Reibungskraft in Umfangsrichtung ergibt.

Besonders bevorzugt ist die Primärmasse an einem in Umfangsrichtung mittig in dem Energiespeicherelement liegenden Mittelpunkt an dem Energiespeicherelement angreifbar. Die Primärmasse kann beispielsweise mit einem abstehenden Ansatz zwischen zwei Windungen einer Bogenfeder, die Teil des Energiespeicherelements ist, eingreifen, so dass die axialen Enden des Energiespeicherelements an jeweils einem Flanschanschlag der Sekundärmasse angreifen können. Die Bauteileanzahl ist dadurch gering gehalten.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Draufsicht auf einen Drehschwingungsdämpfer,
Fig. 2: eine schematische abgewickelte Darstellung eines Teils einer Gleitschale für den Drehschwingungsdämpfer aus Fig. 1 und
Fig. 3: eine schematische abgewickelte Darstellung eines anderen Teils der Gleitschale aus Fig. 2.

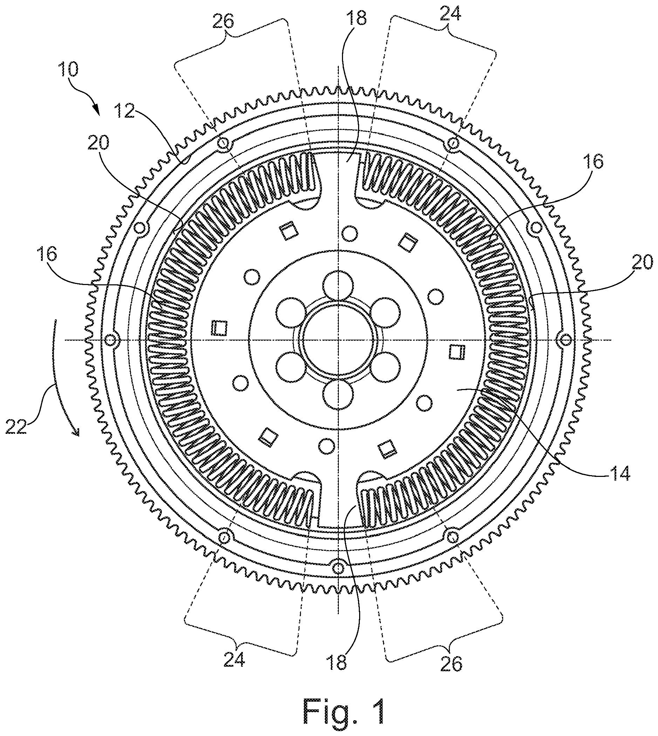

Der in Fig. 1 dargestellte als Zweimassenschwungrad ausgestaltete Drehschwingungsdämpfer 10 weist eine mit einer Antriebswelle, insbesondere Kurbelwelle, eines Kraftfahrzeugmotors koppelbare Primärmasse 12 auf, zu der eine Sekundärmasse 14 begrenzt relativ verdrehbar ausgestaltet ist. Das von dem Kraftfahrzeugmotor im Zugbetrieb eingeleitete Drehmoment kann von der Primärmasse 12 über ein als Bogenfeder ausgestaltetes Energiespeicherelement 16 an die Sekundärmasse 14 übertragen werden. Hierzu kann die Primärmasse 12 beispielsweise einen abstehenden Ansatz aufweisen, der mittig in das Energiespeicherelement 16 eingreift, während die axialen Enden des Energiespeicherelements 16 jeweils an einem Flanschansatz 18 der Sekundärmasse 14 angreifen können. Die Primärmasse 12 bildet einen Aufnahmeraum aus, in dem das Energiespeicherelement 16 angeordnet ist und radial außen an einer Gleitschale 20 reibungsbehaftet anliegen kann. Die Flanschansätze 18 der Sekundärmasse 14 ragen von radial innen her in den von der Primärmasse 12 begrenzten Aufnahmeraum hinein. Die Sekundärmasse 14 kann insbesondere über eine Trennkupplung mit einem Kraftfahrzeuggetriebe gekoppelt sein, das Antriebsräder eines Kraftfahrzeugs im Zugbetrieb antreiben kann.

Der Drehschwingungsdämpfer 10 kann mit der Nenndrehzahl der Antriebswelle in einer Drehrichtung 22 der Antriebswelle rotieren. Wenn bei einer Drehzahlschwankung, insbesondere mit der Frequenz eines ganzzahligen Vielfaches der Motorordnung, die Primärmasse 12 die Sekundärmasse 14 überholt, kann der in Drehrichtung 22 zwischen der Primärmasse 12 und der Sekundärmasse 14 vorgesehene Teil des Energiespeicherelements 16 zumindest teilweise komprimiert werden. Hierbei können die Windungen des als Bogenfeder ausgestalteten Energiespeicherelements 16 in einem Zugendbereich 24 die Haftreibung an der Gleitschale 20 überwinden und mit Gleitreibung relativ zur Primärmasse 12 in einer der Drehrichtung 22 entgegengesetzten Schubrichtung bewegt werden. Wenn bei einer Drehzahlschwankung die Sekundärmasse 14 die Primärmasse 12 überholt, kann der entgegen der Drehrichtung 22 zwischen der Primärmasse 12 und der Sekundärmasse 14 vorgesehene Teil des Energiespeicherelements 16 zumindest teilweise komprimiert werden. Hierbei können die Windungen des als Bogenfeder ausgestalteten Energiespeicherelements 16 in einem Schubendbereich 26 die Haftreibung an der Gleitschale 20 überwinden und mit Gleitreibung relativ zur Primärmasse 12 in einer der Drehrichtung 22 entsprechenden Zugrichtung bewegt werden.

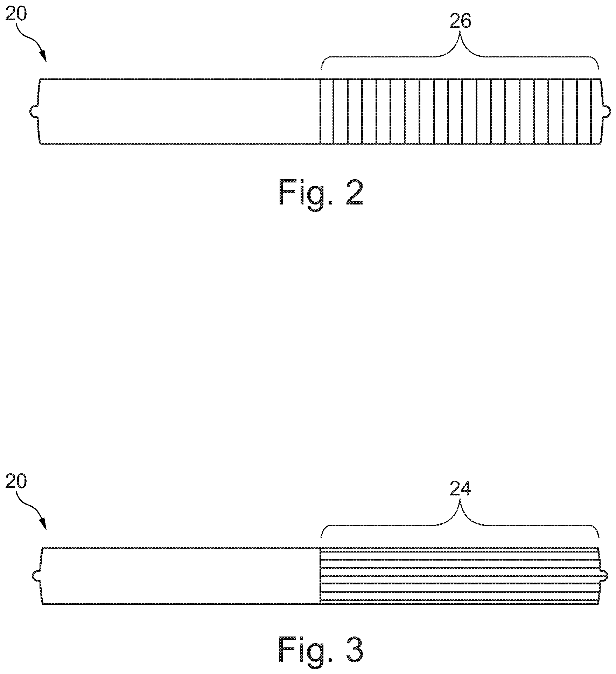

Wie in Fig. 2 dargestellt kann die Gleitschale 20 in einem zum Schubendbereich 26 korrespondierenden Teil beispielsweise durch Schleifen mit einem groben Schleifmittel quer zur Umfangsrichtung spanend bearbeitet sein. Durch die sich quer zur Umfangsrichtung ergebenen Riefen weist die Gleitschale 20 als Reibpartner für das Energiespeicherelement 16 im Bereich des Schubendbereichs 26 einen hohen Reibungskoeffizienten auf, der zu einer hohen an dem Energiespeicherelement 16 angreifbaren Reibungskraft führt. Einer Relativbewegung des Energiespeicherelements 16 relativ zu der Gleitschale 20 der Primärmasse 12 wird dadurch ein entsprechend höherer Reibungswiderstand entgegen gesetzt. Es muss eine höhere Haftreibung überwunden werden, wonach eine höhere Gleitreibung vorgesehen ist.

Wie in Fig. 3 dargestellt kann die Gleitschale 20 in einem zum Zugendbereich 24 korrespondierenden Teil beispielsweise durch Schleifen mit einem feinem Schleifmittel längs zur Umfangsrichtung spanend bearbeitet sein. Durch die sich längs zur Umfangsrichtung ergebenen Riefen, sofern überhaupt erkennbare Riefen vorliegen, weist die Gleitschale 20 als Reibpartner für das Energiespeicherelement 16 im Bereich des Zugendbereichs 24 einen niedrigen Reibungskoeffizienten auf, der zu einer niedrigen an dem Energiespeicherelement 16 angreifbaren Reibungskraft führt. Einer Relativbewegung des Energiespeicherelements 16 relativ zu der Gleitschale 20 der Primärmasse 12 wird dadurch ein entsprechend niedriger Reibungswiderstand entgegen gesetzt. Es muss eine niedrigere Haftreibung überwunden werden, wonach eine niedrigere Gleitreibung vorgesehen ist. An dem beim Komprimieren des Energiespeicherelements 16 in Zugrichtung verlagerbaren Schubendbereich 26 ist dadurch eine größere Reibungskraft angreifbar als an dem beim Komprimieren des Energiespeicherelements 16 in Schubrichtung verlagerbaren Zugendbereich 24.

### Bezugszeichenliste

- 10: Drehschwingungsdämpfer
- 12: Primärmasse
- 14: Sekundärmasse
- 16: Energiespeicherelement
- 18: Flanschansatz
- 20: Gleitschale
- 22: Drehrichtung
- 24: Zugendbereich
- 26: Schubendbereich

## Patentansprüche

1. Drehschwingungsdämpfer, insbesondere Zweimassenschwungrad, zur Drehschwingungsdämpfung zwischen einer Antriebswelle eines Kraftfahrzeugmotors und einer Getriebeeingangswelle eines Kraftfahrzeuggetriebes, mit einer Primärmasse (12) zum im Zugbetrieb Einleiten eines von dem Kraftfahrzeugmotor erzeugbaren Drehmoments,
einer relativ zur Primärmasse (12) begrenzt verdrehbaren Sekundärmasse (14) zum Ausleiten des Drehmoments und
einem an der Primärmasse (12) und an der Sekundärmasse (14) angreifbaren, insbesondere als Bogenfeder ausgestalteten, Energiespeicherelement (16) zur Übertragung des Drehmoments zwischen der Primärmasse (12) und der Sekundärmasse (14),
wobei bei einer Relativbewegung zumindest eines Teils des komprimierenden Energiespeicherelements (16) relativ zu der Primärmasse (12) aus einer Neutralstellung heraus in einer der Drehrichtung des Drehschwingungsdämpfer (10) im Zugbetrieb entsprechenden Zugrichtung eine höhere Reibungskraft an dem Energiespeicherelement (16) angreifbar ist als bei einer Relativbewegung zumindest eines Teils des komprimierenden Energiespeicherelements (16) relativ zu der Primärmasse (12) aus einer Neutralstellung heraus in einer der Drehrichtung des Drehschwingungsdämpfer(10) im Zugbetrieb entgegen gerichteten Schubrichtung, wobei das Energiespeicherelement (16) radial außen an einer Gleitschale (20) relativ bewegbar reibungsbehaftet geführt ist, **dadurch gekennzeichnet, dass** die Gleitschale (20) zur Bereitstellung unterschiedlicher an dem Energiespeicherelement (16) angreifender Reibungskräfte in Umfangsrichtung unterschiedliche Oberflächenbeschaffenheiten aufweist.

2. Drehschwingungsdämpfer nach Anspruch 1 **dadurch gekennzeichnet, dass** das Energiespeicherelement (16) einen in Schubrichtung an der Sekundärmasse (14) anschlagbaren Schubendbereich (26) und einen in Zugrichtung an der Sekundärmasse (14) anschlagbaren Zugendbereich (24) aufweist, wobei auf dem Schubendbereich (26) eine höhere Reibungskraft als an dem Zugendbereich (24) angreift.

3. Drehschwingungsdämpfer nach Anspruch 1 oder 2 **dadurch gekennzeichnet, dass** für das Energiespeicherelement (16) in einem in Zugrichtung relativ zu der Primärmasse (12) verlagerbaren Bereich des komprimierenden Energiespeicherelements (16) ein höherer Reibungskoeffizient zu einem korrespondieren Reibpartner wirksam ist als in einem in Schubrichtung relativ zu der Primärmasse (12) verlagerbaren Bereich des komprimierenden Energiespeicherelements (16).

4. Drehschwingungsdämpfer nach einem der Ansprüche 1 bis 3 **dadurch gekennzeichnet, dass** in einem in Zugrichtung relativ zu der Primärmasse (12) verlagerbaren Bereich des komprimierenden Energiespeicherelements (16) eine höhere Oberflächenrauigkeit des Energiespeicherelements (16) und/oder eines korrespondieren Reibpartners wirksam ist als in einem in Schubrichtung relativ zu der Primärmasse (12) verlagerbaren Bereich des komprimierenden Energiespeicherelements (16).

5. Drehschwingungsdämpfer nach einem der Ansprüche 1 bis 4, **dadurch gekennzeichnet, dass** das Energiespeicherelement (16) mindestens einen die Gleitschale (20) direkt kontaktierenden Gleitschuh aufweist.

6. Drehschwingungsdämpfer nach einem der Ansprüche 1 bis 5 **dadurch gekennzeichnet, dass** in einem in Zugrichtung relativ zu der Primärmasse (12) verlagerbaren Bereich des komprimierenden Energiespeicherelements (16) und/oder eines korrespondierenden Reibpartners eine reibungserhöhende spanende Oberflächenbearbeitung und in einem in Schubrichtung relativ zu der Primärmasse (12) verlagerbaren Bereich des komprimierenden Energiespeicherelements (16) und/oder eines korrespondierenden Reibpartners eine reibungsverringernde spanende Oberflächenbearbeitung vorliegt.

7. Drehschwingungsdämpfer nach Anspruch 6 **dadurch gekennzeichnet, dass** in einem in Zugrichtung relativ zu der Primärmasse (12) verlagerbaren Bereich des komprimierenden Energiespeicherelements (16) und in einem in Schubrichtung relativ zu der Primärmasse (12) verlagerbaren Bereich des komprimierenden Energiespeicherelements (16) unterschiedliche Oberflächenbearbeitungen durch unterschiedliche spanende Bearbeitungsrichtungen und/oder unterschiedlich große spanende Bearbeitungswerkzeuge und/oder unterschiedlich hohe Bearbeitungsdrucke beim Zerspanen und/oder unterschiedlich hohe Bearbeitungsdauern und/oder eine unterschiedliche hohe Anzahl aufgebrachter Reibungspartikel erzeugt sind.

8. Drehschwingungsdämpfer nach einem der Ansprüche 1 bis 7 **dadurch gekennzeichnet, dass** sich die an dem Energiespeicherelement (16) angreifbare Reibungskraft in Umfangsrichtung kontinuierlich und/oder sprungartig ändert.

9. Drehschwingungsdämpfer nach einem der Ansprüche 1 bis 8 **dadurch gekennzeichnet, dass** die Primärmasse (12) an einem in Umfangsrichtung mittig in dem Energiespeicherelement (16) liegenden Mittelpunkt an dem Energiespeicherelement (16) angreifbar ist.

## Claims

1. A torsional vibration damper, in particular a dual-mass flywheel, for damping torsional vibrations between a drive shaft of a motor vehicle engine and a transmission input shaft of a motor vehicle transmission, comprising a primary mass (12) for introducing in traction mode a torque that can be generated by the motor vehicle engine,
a secondary mass (14) which is limitedly rotatable relative to the primary mass (12) for discharging the torque and
an energy storage element (16), which can act on the primary mass (12) and on the secondary mass (14) and is designed in particular as a bow spring, for transferring the torque between the primary mass (12) and the secondary mass (14), wherein, during a relative movement of at least part of the compressive energy storage element (16) relative to the primary mass (12) from a neutral position in a traction direction corresponding to the rotational direction of the torsional vibration damper (10) in traction mode, a higher frictional force can act on the energy storage element (16) than during a relative movement of at least one part of the compressive energy storage element (16) relative to the primary mass (12) from a neutral position in a thrust direction which is directed counter to the rotational direction of the torsional vibration damper (10) in traction mode, wherein the energy storage element (16) is guided radially outward on a sliding shell (20) so as to be relatively movable under friction, **characterised in that** the sliding shell (20) has different surface properties for providing different frictional forces acting on the energy storage element (16) in the circumferential direction.

2. The torsional vibration damper according to claim 1, **characterised in that** the energy storage element (16) comprises a thrust end region (26) which can about the secondary mass (14) in the thrust direction and a traction end region (24) which can about the secondary mass (14) in the traction direction, wherein a higher frictional force acts on the thrust end region (26) than on the traction end region (24).

3. The torsional vibration damper according to claim 1 or 2, **characterised in that**, for the energy storage element (16) in a region of the compressive energy storage element (16) that is displaceable in the traction direction relative to the primary mass (12), a higher coefficient of friction is effective on a corresponding friction partner than in a region of the compressive storage element (16) that is displaceable in a thrust direction relative to the primary mass (12).

4. The torsional vibration damper according to one of claims 1 to 3, **characterised in that**, in a region of the compressive energy storage element (16) that is displaceable in the traction direction relative to the primary mass (12), a higher surface roughness of the energy storage element (16) and/or of a corresponding friction partner acts than in a region of the compressive energy storage element (16) that is displaceable in the thrust direction relative to the primary mass (12).

5. The torsional vibration damper according to one of claims 1 to 4, **characterised in that** the energy storage element (16) comprises at least one sliding block directly contacting the sliding shell (20).

6. The torsional vibration damper according to one of claims 1 to 5, **characterised in that**, in a region of the compressive energy storage element (16) and/or of a corresponding friction partner, which is displaceable in the traction direction relative to the primary mass (12), there is a friction-increasing machining surface treatment and, in a region of the compressive energy storage element (16) and/or of a corresponding friction partner, which is displaceable in the thrust direction relative to the primary mass (12), there is a corresponding friction-reducing machining surface treatment.

7. The torsional vibration damper according to claim 6, **characterised in that**, in a region of the compressive energy storage element (16) that is displaceable in the traction direction relative to the primary mass (12) and in a region of the compressive energy storage element (16) that is displaceable in the thrust direction relative to the primary mass (12), different surface treatments are produced by different machining directions and/or differently sized machining tools and/or different height machining pressures during machining and/or different lengths of machining times and/or a different quantity of applied friction particles.

8. The torsional vibration damper according to one of claims 1 to 7, **characterised in that** the frictional force which can act on the energy storage element (16) changes continuously and/or abruptly in the circumferential direction.

9. The torsional vibration damper according to one of claims 1 to 8, **characterised in that** the primary mass (12) can be acted on by the energy storage element (16) at a centre point located centrally in the circumferential direction in the energy storage element (16).

## Revendications

1. Amortisseur de vibrations de torsion, en particulier volant d'inertie à deux masses, pour amortir les vibrations de torsion entre un arbre d'entraînement d'un moteur de véhicule automobile et un arbre d'entrée de transmission d'une transmission de véhicule automobile, comprenant une masse primaire (12) pour introduire un couple pouvant être généré par le moteur du véhicule automobile pendant l'opération de traction,
une masse secondaire (14) qui peut tourner de manière limitée par rapport à la masse primaire (12) pour décharger le couple et
un élément de stockage d'énergie (16), pouvant agir sur la masse primaire (12) et sur la masse secondaire (14) et conçu notamment comme un ressort arqué, pour transmettre le couple entre la masse primaire (12) et la masse secondaire (14),
lors d'un mouvement relatif d'au moins une partie de l'élément de stockage d'énergie de compression (16) par rapport à la masse primaire (12) depuis une position neutre dans un sens de traction correspondant au sens de rotation de l'amortisseur de vibrations de torsion (10) pendant l'opération de traction, une force de friction plus élevée pouvant agir sur l'élément de stockage d'énergie (16) comparé à un mouvement relatif d'au moins une partie de l'élément de stockage d'énergie de compression (16) par rapport à la masse primaire (12) depuis une position neutre dans un sens de poussée opposé au sens de rotation de l'amortisseur de vibrations de torsion (10) pendant l'opération de traction, l'élément de stockage d'énergie (16) étant guidé par friction pour être relativement mobile radialement vers l'extérieur sur une coque coulissante (20), **caractérisé en ce que** la coque coulissante (20) présente des propriétés de surface différentes dans le sens circonférentiel pour fournir différentes forces de friction agissant sur l'élément de stockage d'énergie (16).

2. Amortisseur de vibrations de torsion selon la revendication 1, **caractérisé en ce que** l'élément de stockage d'énergie (16) présente une région d'extrémité de poussée (26) qui peut venir buter contre la masse secondaire (14) dans le sens de poussée et une région d'extrémité de traction (24) qui peut venir buter contre la masse secondaire (14) dans le sens de traction, une force de friction supérieure à celle de la région d'extrémité de traction (24) agissant sur la région d'extrémité de poussée (26).

3. Amortisseur de vibrations de torsion selon la revendication 1 ou 2, **caractérisé en ce que** pour l'élément de stockage d'énergie (16) dans une région de l'élément de stockage d'énergie de compression (16) qui peut être déplacée dans le sens de traction par rapport à la masse primaire (12), un coefficient de frottement plus élevé par rapport à un partenaire de friction correspondant est efficace comparé à une région de l'élément de stockage d'énergie de compression (16) qui peut être déplacée dans le sens de poussée par rapport à la masse primaire (12).

4. Amortisseur de vibrations de torsion selon l'une quelconque des revendications 1 à 3, **caractérisé en ce qu'**une rugosité de surface plus élevée de l'élément de stockage d'énergie (16) et/ou d'un partenaire de friction correspondant est efficace dans une région de l'élément de stockage d'énergie de compression (16) qui peut être déplacée dans le sens de traction par rapport à la masse primaire (12) comparé à une région de l'élément de stockage d'énergie de compression (16) qui peut être déplacée dans le sens de poussée par rapport à la masse primaire (12).

5. Amortisseur de vibrations de torsion selon l'une quelconque des revendications 1 à 4, **caractérisé en ce que** l'élément de stockage d'énergie (16) présente au moins un patin qui est en contact direct avec la coque coulissante (20).

6. Amortisseur de vibrations de torsion selon l'une quelconque des revendications 1 à 5, **caractérisé en ce que** dans une région de l'élément de stockage d'énergie de compression (16) et/ou d'un partenaire de friction correspondant qui peut être déplacée dans le sens de traction par rapport à la masse primaire (12), il existe un traitement par usinage en surface augmentant le frottement et dans une région de l'élément de stockage d'énergie de compression (16) et/ou d'un partenaire de friction correspondant qui peut être déplacée dans le sens de poussée par rapport à la masse primaire (12), il existe un traitement par usinage en surface réduisant le frottement.

7. Amortisseur de vibrations de torsion selon la revendication 6, **caractérisé en ce que** dans une région de l'élément de stockage d'énergie de compression (16) qui peut être déplacée dans le sens de traction par rapport à la masse primaire (12) et dans une région de l'élément de stockage d'énergie de compression (16) qui peut être déplacée dans le sens de poussée par rapport à la masse primaire (12), différents traitements de surface sont générés par différents traitements par usinage et/ou par des outils de traitement par usinage de taille variable et/ou des pressions de traitement variables lors de l'usinage et/ou des durées de traitement variables et/ou un nombre variable de particules rugueuses appliquées.

8. Amortisseur de vibrations de torsion selon l'une quelconque des revendications 1 à 7, **caractérisé en ce que** la force de frottement susceptible d'agir sur l'élément de stockage d'énergie (16) évolue de façon continue et/ou brutale dans le sens circonférentiel.

9. Amortisseur de vibrations de torsion selon l'une quelconque des revendications 1 à 8, **caractérisé en ce que** la masse primaire (12) peut agir sur l'élément de stockage d'énergie (16) en un point central situé centralement, dans le sens circonférentiel, dans l'élément de stockage d'énergie (16).
